# EUROPEAN PATENT SPECIFICATION

(11) **EP 2 023 782 B1**
(45) Date of publication and mention of the grant of the patent: **18.11.2009**
(21) Application number: 07735864.6
(22) Date of filing: 11.05.2007
(51) Int. Cl.: A47J 31/40, B67D 1/00

(54) **APPARATUS FOR PREPARING A BEVERAGE FROM AN AQUEOUS LIQUID AND A FATTY INSTANT PRODUCT, IN PARTICULAR BABY MILK**
VORRICHTUNG FÜR DIE ZUBEREITUNG EINES GETRÄNKS AUS EINER WÄSSRIGEN FLÜSSIGKEIT UND EINEM FETTIGEN INSTANTPRODUKT, V.A. SÄUGLINGSMILCH
APPAREIL POUR PRÉPARER UNE BOISSON À PARTIR D'UN LIQUIDE AQUEUX ET UN PRODUIT INSTANTANÉ GRAS, EN PARTICULIER DU LAIT POUR NOURRISSON

(30) Priority: 19.05.2006 EP 06114208
(43) Date of publication of application: 18.02.2009
(73) Proprietor: Koninklijke Philips Electronics N.V., 5621 BA Eindhoven (NL)
(72) Inventor: OVERSTEEGEN, Simon, M., 5656 AA Eindhoven (NL); VAN DER KAMP, Gertrude, R., 5656 AA Eindhoven (NL); DE WIT, Bastiaan, J., 5656 AA Eindhoven (NL)
(74) Representative: Uittenbogaard, Frank
(86) International application number: PCT/IB2007/051789
(87) International publication number: WO 2007/135606

(56) References cited:
- US-A- 4 191 101
- US-A1- 2006 034 987
- US-A1- 2006 045 942

## Description

The invention relates to an apparatus for preparing a beverage from an aqueous liquid, such as for instance water, and a fatty instant product, such as for instance milk powder or baby formula.

Such apparatus is known from US 5,570,816. In this known apparatus, appropriate amounts of sterilized water and dry formula are dispensed in a bottle via two separate dispense funnels to prevent the water and formula from mixing and clogging the apparatus. The bottle must subsequently be shaken manually to mix the water and formula. In general, water and dry formula do not mix easily. The formula tends to float on the water and form big lumps therein. Also, when the formula is dispensed in the bottle it may cling to the bottle wall and form lumps, especially when the wall is moist, for instance due to prior cleaning. Long and vigorous shaking is needed to have these lumps dissolve. Therefore, with the known apparatus, the quality of the mixture will depend very much on the shaking skills and patience of the user. A lump free bottle is not guaranteed. Similar apparatus are known from US-A-4591101 and US-A-2006/0034987.

Furthermore, apparatuses are known, whereby mixing of the water and formula is done within the apparatus, in a special mixing chamber with special mixing hardware such as stirring means or shaking means. A disadvantage of such apparatuses is that the mixture may still contain lumps if mixing is not done properly. Moreover, the apparatuses need to be cleaned regularly, as the generally sticky mixture may easily clog the apparatus and moreover forms excellent proliferation places for bacteria. Cleaning of the apparatus may be tedious and time consuming.

It is therefore an objective of the invention to provide an apparatus of the above-described type, in which the disadvantages of the known apparatuses are overcome, or at least reduced. More particularly, it is an objective of the invention, to provide an apparatus for preparing a beverage from an aqueous liquid and a fatty instant product, wherein said liquid and instant product are properly mixed, substantially free of lumps, and preferably with minimum contamination of the apparatus.

To that end an apparatus according to the invention is **characterized in that** a first and second nozzle of said apparatus are respectively arranged to dispense predetermined quantities of instant product and liquid in a predetermined order and a predetermined direction. Thanks to such control over the dispense quantity, dispense direction and dispense order, the ingredients can be mixed while being dispensed in some receptacle, thereby obviating the need for a special mixing chamber with mixing means. Contact between the apparatus and the mixture can be avoided, which may enhance hygiene and reduce necessary maintenance activities such as cleaning of the apparatus. Preparation times can be short, now that the mixing is done during dispensing and therefore does not take additional time.

Further advantageous aspects of an apparatus according to the present invention are set forth in the dependent claims and will become clear from the following description, in which exemplary embodiments of the invention are described in further detail, with reference to the accompanying drawings, wherein:
Fig. 1 schematically shows a general set-up of a beverage preparing apparatus in which a dispense and mix unit according to the invention can be advantageously applied;
Fig. 2 shows a first dispense and mix unit according to the invention, suitable for mixing liquid and instant product in a first manner; and
Fig. 3 shows an alternative manner in which liquid and an instant product can be mixed, for instance with the dispense and mix unit of Fig. 2.

In this description, the invention will be explained in relation to an apparatus for preparing milk, in particular baby milk from water and dry formula. It should however be clear that the invention is likewise applicable in other applications where beverages are to be mixed from an aqueous liquid and an instant product, such as for instance a dairy drink or soup. The instant product may be supplied in different forms, for instance in powder form, ground form or granular form.

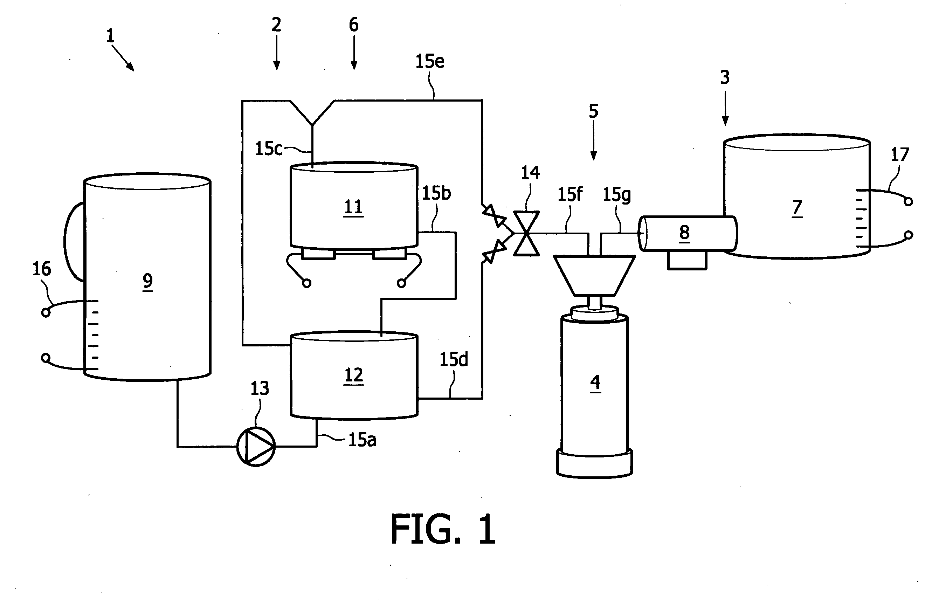

The apparatus 1 shown in Figure 1 comprises a first supply system 2 and a second supply system 3 for feeding an aqueous liquid, such as water, respectively an instant product, such as dry formula, to a dispense and mix unit 5. As will be described below, this unit 5 is arranged to mix predetermined quantities of said water and formula, while these quantities are being dispensed in a receptacle 4 positioned underneath the dispense and mix unit 5. The receptacle 4 may for instance be a baby bottle.

The first supply system 2 may include a treatment section 6, for removing, killing, inactivating or otherwise clearing the water from undesired micro-organisms, such as bacteria, before reaching the dispense and mix unit 5. In the illustrated embodiment, the treatment section 6 includes a heating unit 11, such as for instance a boiler, electric coil or other heating means, to sterilize the liquid through heating, and a cooling unit 12, such as for instance a heat exchanger, to cool down the heated liquid to an acceptable consumption temperature. In an alternative embodiment (not shown), the treatment section 6 may comprise one or more filters, a UV-source and/or an electric pulse generator, suitable for removing, destroying and/or inactivating aforementioned micro-organisms.

The second supply system 3 may include a container 7, scraping means (not visible) and feeding means 8, for discharging a desired quantity of formula from the container 7 to the dispense and mix unit 5.

The apparatus 1 may further comprise a control unit (not shown) to control the first and second supply systems 2, 3 and the dispense and mix unit 5 into supplying and dispensing the correct quantities of liquid and formula. Preferably, such control unit is programmed or programmable with user specific information, for instance a recipe with prescribed liquid/formula concentrations, possibly in dependency of formula brand, weight, age and/or feeding scheme of a toddler to be fed. The control unit may further contain safety threshold values, which may trigger an alarm when with help of suitable detection means 16, 17 it is detected that the threshold values are exceeded.

The apparatus 1 may furthermore comprises means for transporting the desired amounts of water and formula along the various aforementioned units, such as pumping means 13, one or more valves 14 and several supply lines 15a-g. As these components are known per se and moreover may be combined into many different configurations, no further description will be given here.

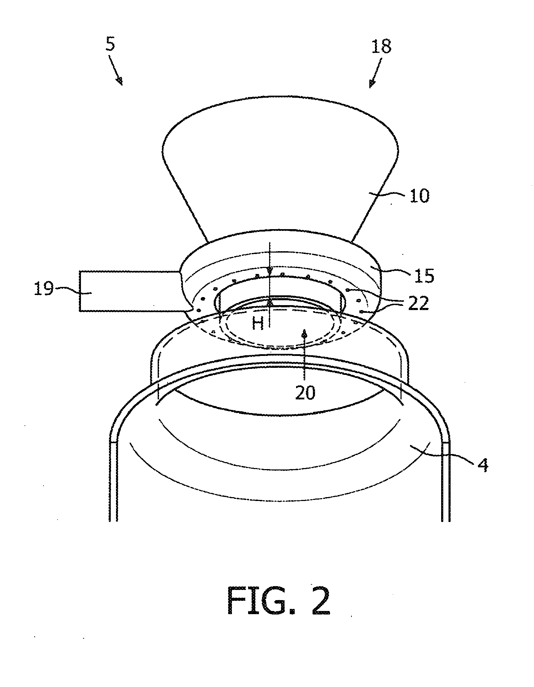

Figure 2 shows a first embodiment of a dispense and mix unit 5 according to the invention. This dispense and mix unit 5 comprises a first nozzle 10 and a second nozzle 15 for dispensing and mixing instant product and water respectively in a receptacle 4 underneath the unit 5. In the present embodiment, the first nozzle 10 is of substantially funnel-shaped design, with an upper inlet opening 18 for connection to the second supply system 3, and a lower outlet opening 20 for releasing the instant product. In an alternative embodiment, the first nozzle 10 may have a different shape, for instance cylindrical.

The second nozzle 15 is of substantially annular shape, surrounding the first nozzle 10 near its outlet opening 20. The second nozzle 15 comprises an inlet channel 19 for connection to the first supply system 2 and a series of holes 22, for releasing the water. Preferably, the holes 22 are small-sized and spaced at regular intervals around the circumference of the first nozzle 10.

The first and second nozzle 10, 15 may furthermore comprise valve like control means, for controlling a flow rate of formula and water through the respective outlet opening 20 and holes 22, between a maximum value and a zero flow rate and, preferably, any value in between. Alternatively, such control means may be provided elsewhere in the apparatus 1, e.g. in the supply lines 15f, 15g leading towards the first and second nozzle 10, 15.

The dispense and mix unit 5 may operate as follows. In a first operation mode, predetermined flow rates of water and formula may be released simultaneously or substantially simultaneously via the first and second nozzles 10, 15. The water, dispensed through the series of holes 22 of the second nozzle 15, will form a substantially cylindrical water curtain, which surrounds the formula and prevents it from dispersing to the receptacle wall. Thus, the formula is prevented from forming lumps against the receptacle wall.

Further, thanks to the small size of the holes 22, the water jetted from the second nozzle 15 will have a considerable speed, which will generate a pressure gradient that causes the formula to be drawn downwards. Thus, formula dispensed from the first nozzle 10 is prevented from being blown upward and contaminate the first and second nozzles 10, 15.

In a preferred embodiment, the outlet opening 20 of the first nozzle 10 protrudes from the second nozzle 15 over a distance H, as clearly shown in Figure 2. Thanks to such protrusion the water curtain, dispensed by the second nozzle 15, can surround the entire formula stream dispensed by the first nozzle 10, and as such ensure that no formula can 'escape'. A similar result may be achieved by activating the second nozzle 15 shortly before the first nozzle 10, thereby allowing the water curtain to be in place before the formula is dispensed. Likewise, the second nozzle 15 may be deactivated shortly after the first nozzle 10, so as to have the water curtain dissolved only after the dispensing of formula has been stopped.

Thanks to the water jets being evenly distributed around the formula stream and their high speed, good mixing will take place between the water and the formula, resulting in a smooth mixture, free of lumps. No additional shaking or stirring is required. Most of the mixing will occur in the stream, before the formula and water touch the receptacle 4. The impact and subsequent turbulence upon hitting the receptacle 4 may provide for an additional mixing action.

Optionally, the second nozzle 15 may be redesigned so as to have the water jets that leave the holes 22 include an angle, more specifically an acute angle, with the main direction of the formula flow that leaves the first nozzle 10. The water jets may for instance be redirected so as to converge towards the bottom of the receptacle 4. Thus, a conical water curtain may be formed, which depending on the angle can intersect the formula flow at some point during its free fall. With such configuration, mixing of the water and formula may be improved or intensified and/or started at an earlier stage. Of course, in alternative embodiments it is possible to have the water jets diverge.

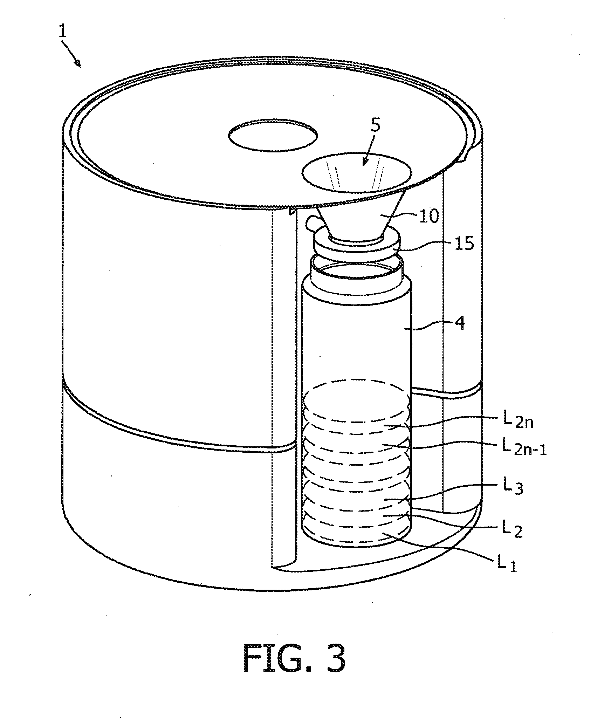

According to a second operation mode, the dispense and mix unit 5 of Figure 2 can be operated to dispense water and formula alternately, as illustrated in Figure 3. In this operation mode, the first and second nozzle 10, 15 are controlled by aforementioned valve like control means, to alternately release predetermined quantities of formula and water respectively. Consequently, alternate layers of water L_{1,..,2n-1} and formula L_{2,..,2n} will be formed in the receptacle 4, which in Figure 3 have been shown with exaggerated thickness. In reality, said layers L_{1,2,..2n} will be very thin and moreover, will not remain segregated but will mix, due to gravity and turbulence, evoked in the receptacle 4 each time a new layer Lᵢ is dispensed therein.

Preferably, the dispensing session is started with a layer of water, as illustrated in Figure 3. Thus it can be prevented that formula sticks to the bottom of the receptacle and forms lumps.

It will be appreciated that this layer-by-layer dispensing can be done with a different dispense and mix unit 5 than the one shown in Figure 2, wherein the first and second nozzle 10, 15 are not arranged concentrically, but are for instance juxtaposed.

In the embodiments of Figure 2 and 3, mixing is shown to take place outside the apparatus 1, offering the advantage that the apparatus 1 will not be contaminated by the mixture. Hence, hygienic operation is ensured. However, it will be clear that in other embodiments, mixing may take place in the apparatus 1 or in a discharge tube through which water and formula are discharged out off the apparatus 1. In such case, the dispense and mixing unit may for instance comprises a discharge tube, which near an upper end is provided with a first nozzle for supply of formula and a second nozzle for supply of water, and near a lower end is provided with a dispense opening. The first and second nozzles may be positioned side by side and respectively be connected to the second and first supply systems. Suitable control means may be provided for controlling the amount and/or flow rate of formula and water supplied through said nozzles.

The discharge tube may be designed to alter the flow path of the water and formula, so as to bring these flows in close contact to each other and enhance their mixing. For instance, the inner wall of the discharge tube may be provided with guiding ribs or the like, to bring the water and formula flow in a desired swirling motion. Additionally or alternatively, the first and second nozzles may be designed to discharge the formula and water under a specific angle, as described in relation to Figure 2. To facilitate cleaning, the discharge tube may be detachable from the apparatus 1. Optionally, the discharge tube may be surrounded by a heating element, allowing the beverage to be brought at a desired consumption temperature while being mixed. It will be appreciated that thanks to such simultaneous heating and mixing, preparation times can be even shorter.

## Claims

1. Apparatus for preparing a beverage from an aqueous liquid and a fatty, dry instant product, such as formula or milk powder, the apparatus comprising:
- a first supply system (2) for supplying the aqueous liquid;
- a second supply system (3) for supplying the instant product; and
- a dispense unit (5), comprising a first nozzle (10) for dispensing a predetermined quantity of the instant product and a second nozzle (15) for dispensing a predetermined quantity of the liquid, the first and second nozzles (10, 15) being arranged to dispense the instant product and liquid in a predetermined order and a predetermined direction, so as to have these ingredients mix without the use of additional mixing means or operations, **characterized in that** the second nozzle (15) or at least an outlet opening thereof, surrounds the first nozzle (10) or at least an outlet opening thereof.

2. Apparatus according to claim 1, wherein the first and second nozzle are activated substantially simultaneously so that dispensed instant product is surrounded by dispensed liquid.

3. Apparatus according to claim 1, wherein the first and second nozzle are activated substantially alternately, so that thin layers of liquid and instant product are dispensed alternately.

4. Apparatus according to anyone of the preceding claims, wherein the second nozzle is activated before the first nozzle, so that dispensing is started with liquid.

5. Apparatus according to anyone of the preceding claims, wherein the second nozzle is deactivated after the first nozzle, so that dispensing is ended with liquid.

6. Apparatus according to anyone of the preceding claims, wherein the first nozzle is funnel-shaped.

7. Apparatus according to anyone of claims 1-6, wherein an outlet opening of the second nozzle is formed by a series of small-sized holes, extending at regularly spaced intervals around an outlet opening of the first nozzle.

8. Apparatus according to anyone of claims 1-7, wherein the first nozzle protrudes from the surrounding second nozzle over a distance H.

9. Apparatus according to anyone of the preceding claims, wherein the first and/or second nozzle are designed to have the predetermined direction in which the instant product and liquid are dispensed include an angle, more specifically an acute angle.

10. Apparatus according to anyone of the preceding claims, wherein the dispense unit is provided with flow guiding means, extending at least partly in the flow path of the instant product and/or liquid, dispensed by the first and second nozzle respectively, so as to alter the direction of at least one of these flow paths.

## Patentansprüche

1. Vorrichtung für die Zubereitung eines Getränks aus einer wässrigen Flüssigkeit und einem fetthaltigen, trockenen Instantprodukt, wie z.B. Säuglingsmilchnahrung oder Milchpulver, wobei die Vorrichtung umfasst:
- ein erstes Versorgungssystem (2) zum Zuführen der wässrigen Flüssigkeit;
- ein zweites Versorgungssystem (3) zum Zuführen des Instantprodukts; sowie
- eine Abgabeeinheit (5) mit einer ersten Düse (10) zur Abgabe einer
vorgegebenen Menge des Instantprodukts sowie einer zweiten Düse (15) zur Abgabe einer vorgegebenen Menge der Flüssigkeit, wobei die erste und zweite Düse (10, 15) angeordnet sind, um das Instantprodukt und die Flüssigkeit in einer vorgegebenen Reihenfolge und einer vorgegebenen Richtung abzugeben, damit diese Bestandteile ohne Verwendung zusätzlicher Mischmittel oder -vorgänge gemischt werden, **dadurch gekennzeichnet, dass** die zweite Düse (15) oder zumindest eine Auslassöffnung derselben die erste Düse (10) oder zumindest eine Auslassöffnung derselben umgibt.

2. Vorrichtung nach Anspruch 1, wobei die erste und zweite Düse im Wesentlichen gleichzeitig aktiviert werden, so dass abgegebenes Instantprodukt von abgegebener Flüssigkeit umgeben ist.

3. Vorrichtung nach Anspruch 1, wobei die erste und zweite Düse im Wesentlichen abwechselnd aktiviert werden, so dass dünne Flüssigkeits- und Instantproduktschichten abwechselnd abgegeben werden.

4. Vorrichtung nach einem der vorangegangenen Ansprüche, wobei die zweite Düse vor der ersten Düse aktiviert wird, so dass die Abgabe mit Flüssigkeit begonnen wird.

5. Vorrichtung nach einem der vorangegangenen Ansprüche, wobei die zweite Düse nach der ersten Düse deaktiviert wird, so dass die Abgabe mit Flüssigkeit beendet wird.

6. Vorrichtung nach einem der vorangegangenen Ansprüche, wobei die erste Düse trichterförmig ist.

7. Vorrichtung nach einem der Ansprüche 1-6, wobei eine Auslassöffnung der zweiten Düse durch eine Reihe kleiner Löcher gebildet wird, die sich bei regelmäßig beabstandeten Zwischenräumen um eine Auslassöffnung der ersten Düse erstrecken.

8. Vorrichtung nach einem der Ansprüche 1-7, wobei die erste Düse aus der, diese umgebenden, zweiten Düse über eine Distanz H hervorragt.

9. Vorrichtung nach einem der vorangegangenen Ansprüche, wobei die erste und/oder zweite Düse so ausgeführt sind/ist, dass die vorgegebene Richtung, in welcher das Instantprodukt und die Flüssigkeit abgegeben werden, einen Winkel, genauer gesagt, einen spitzen Winkel, einschließt.

10. Vorrichtung nach einem der vorangegangenen Ansprüche, wobei die Abgabeeinheit mit Flussleitmitteln versehen ist, die sich zumindest teilweise in dem Strömungsweg des von der ersten bzw. zweiten Düse abgegebenen Instantprodukts und/oder der Flüssigkeit erstrecken, um die Richtung von mindestens einem dieser Strömungswege zu verändern.

## Revendications

1. Appareil pour préparer une boisson à partir d'un liquide aqueux et à partir d'un produit instantané gras et sec, tel que la formule ou du lait en poudre, l'appareil comprenant:
- un premier système d'alimentation (2) pour fournir le liquide aqueux ;
- un deuxième système d'alimentation (3) pour fournir le produit instantané ; et
- une unité de distribution (5) comprenant une première buse (10) pour
distribuer une quantité prédéterminée du produit instantané et une deuxième buse (15) pour distribuer une quantité prédéterminée du liquide, la première et la deuxième buse (10, 15) étant agencées de manière à distribuer le produit instantané et le liquide dans un ordre prédéterminé et dans une direction prédéterminée de façon à assurer que ces ingrédients se mélangent sans l'utilisation de moyens ou d'opérations additionnelles de mélange, **caractérisé en ce que** la deuxième buse (15) ou au moins un orifice de sortie de celle-ci entoure la première buse (10) ou au moins un orifice de sortie de celle-ci.

2. Appareil selon la revendication 1, dans lequel la première et la deuxième buse sont activées d'une manière sensiblement momentanée, de sorte que le produit instantané distribué est entouré du liquide distribué.

3. Appareil selon la revendication 1, dans lequel la première et la deuxième buse sont activées d'une manière sensiblement alternative, de sorte que des couches minces de liquide et de produit instantané sont distribuées alternativement.

4. Appareil selon l'une quelconque des revendications précédentes 1 à 3, dans lequel la deuxième buse est activée avant la première buse, de sorte que la distribution est démarrée avec du liquide.

5. Appareil selon l'une quelconque des revendications précédentes 1 à 4, dans lequel la deuxième buse est désactivée après la première buse, de sorte que la distribution est terminée avec du liquide.

6. Appareil selon l'une quelconque des revendications précédentes 1 à 5, dans lequel la première buse est en forme d'entonnoir.

7. Appareil selon l'une quelconque des revendications précédentes 1 à 6, dans lequel un orifice de sortie de la deuxième buse est formé par une série de trous de petite dimension s'étendant à des intervalles réguliers autour d'un orifice de sortie de la première buse.

8. Appareil selon l'une quelconque des revendications précédentes 1 à 7, dans lequel la première buse fait saillie de la deuxième buse environnante sur une distance H.

9. Appareil selon l'une quelconque des revendications précédentes 1 à 8, dans lequel la première et/ou la deuxième buse sont conçues de manière à présenter la direction prédéterminée dans laquelle le produit instantané et le liquide sont distribués sous un angle, plus spécifiquement sous un angle aigu.

10. Appareil selon l'une quelconque des revendications précédentes 1 à 9, dans lequel l'unité de distribution est pourvue de moyens de guidage de flux s'étendant au moins partiellement dans le trajet d'écoulement du produit instantané et/ou du liquide qui sont distribués par la première et la deuxième buse, respectivement, de manière à modifier la direction d'au moins un de ces trajets d'écoulement.
